# EUROPÄISCHE PATENTSCHRIFT

(11) **EP 0 486 633 B1**
(45) Veröffentlichungstag und Bekanntmachung des Hinweises auf die Patenterteilung: **24.07.1996**
(21) Anmeldenummer: 91909649.5
(22) Anmeldetag: 17.05.1991
(51) Int. Cl.: F16L 47/06, B65G 57/18

(54) **Presskörper aus Kunststoff in Form eines Muffenrohrs**
Pressed object of plastic material in the shape of a socket pipe
Pièce pressée en matière plastique sous forme d'un tuyau avec manchon

(30) Priorität: 17.05.1990 DE 4015908
(43) Veröffentlichungstag der Anmeldung: 27.05.1992
(73) Patentinhaber: Ertl, Franz Xaver, D-83624 Otterfing (DE)
(72) Erfinder: Weichenrieder, Erich jun., D-83624 Otterfing (DE)
(74) Vertreter: Hieke, Kurt
(86) Internationale Anmeldenummer: DE9100405
(87) Internationale Veröffentlichungsnummer: WO9118233

(56) Entgegenhaltungen:
- EP-A- 0 304 290
- CH-A- 530 822
- DE-B- 1 172 418
- US-A- 3 685 748

## Beschreibung

Die Erfindung betrifft einen Preßkörper aus Kunststoff in Form eines mit mindestens einer Muffe versehenen Muffenrohrs, insbesondere für Abwasserleitungen, der am freien Ende mindestens eines rohrförmigen Abschnitts eine mit ihrem Innendurchmesser dem Außendurchmesser des rohrförmigen Abschnitts angepaßte, verstärkte Muffe und im Bereich der Muffe einen Ringbereich mit vergrößertem Innendurchmesser zur Aufnahme eines Dichtungsrings aufweist, wobei der Preßkörper an der Außenseite des rohrförmigen Abschnitts mit Profilierungen versehen ist.

Es ist bekannt, Muffenrohre aus Kunststoff auch für Abwasserleitungen einzusetzen. Muffenrohre aus Kunststoff werden bisher entweder in der Weise hergestellt, daß ein glattes Rohr extrudiert wird und an das extrudierte Rohr die Muffe angeformt wird. Es ist aus der gattungsgemäßen EP-A-0 304 290 aber auch bekannt, Muffenrohre aus Kunststoff in geteilten Formen im Spritz- oder Blasverfahren herzustellen, so daß aufgrund der Verwendung geteilter Formen auch Hinterschneidungen angeformt werden können.

Bei der Herstellung im Extrusionsverfahren wird entweder vom extrudierten Rohrstrang eine passende Länge abgetrennt und dann in einer Formstation die Muffe angeformt, oder es wird ein mit dem extrudierten Strang mitlaufender Formapparat verwendet, der das glattwandige Rohr aufheizt und die Muffe ausformt, worauf das Muffenrohr vom extrudierten Strang abgetrennt und der Formapparat entgegen der Extrusionsrichtung in seine Startposition zurückbewegt wird, um den nachfolgenden Abschnitt des extrudierten Rohres während der Extrusionsbewegung in ein Muffenrohr zu verformen. Schließlich muß das andere Ende bearbeitet werden, um es abzuschrägen.

Dieses Herstellungsverfahren ist relativ aufwendig, zumal nach der Formgebung noch eine Nachbearbeitung durchgeführt werden muß; außerdem erfordert das Extrusionsverfahren ein hochwertiges und damit ebenfalls relativ teueres Kunststoffmaterial.

Es kommt hinzu, daß die Verformung des extrudierten Materials zur Erzeugung der Muffe eine Aufweitung ist, die eine Querschnittsschwächung in diesem Bereich zur Folge hat, was deshalb unangenehm ist, weil im Bereich der Muffe die stärkste Beanspruchung auftritt. Formbeständigkeit ist gerade in diesem Bereich besonders wichtig, um zu verhindern, daß das Leitungssystem undicht wird.

Demgegenüber ist die Herstellung in geteilten Formen im Spritz- oder Blasverfahren vorteilhafter, weil Rohr und Muffe in einem Arbeitsgang gefertigt werden können, wenn auch die Ausbildung gegebenenfalls erwünschter innerer Hinterschneidungen einen zerlegbaren und damit teueren Kern erfordert. Die EP-A-0 304 290 beschreibt eine Möglichkeit, in solchen Fällen einen zerlegbaren Kern dadurch zu vermeiden, daß das Muffenrohr in der Form ohne innere Hinterschneidung erzeugt wird und am Muffenende Formstücke angeformt werden, die nach dem Entformen in das Muffeninnere eingestülpt werden, um eine Ringnut zu begrenzen.

Bisher bekannte Muffenrohre, auch die in geteilten Formen gefertigten Muffenrohre, weisen im wesentlichen die herkömmliche rotationssymmetrische Form auf, weshalb für deren Transport besondere Vorrichtungen eingesetzt werden müssen, die verhindern, daß die Rohre ins Rollen kommen. Diese Vorrichtungen müssen als Leergut zur Fabrikations- und/oder Verladestätte zurücktransportiert werden und stellen somit einen zusätzlichen Kostenfaktor dar.

Der Erfindung liegt die Aufgabe zugrunde, einen Preßkörper in Form eines Muffenrohrs so auszugestalten, daß diese zusätzlichen Kosten vermieden werden und trotzdem ein lagesicheres Stapeln und Transportieren der Muffenrohre gewährleistet ist.

Die Lösung dieser Aufgabe besteht darin, daß der Preßkörper durch die sich zumindest über einen Teil der Rohrlänge erstrekkenden Profilierungen unrund gestaltet ist.

Durch die Herstellung von Muffenrohren als Preßkörper und die dabei anzuwendenen, geteilten Preßformen besteht die Möglichkeit zu dieser Formgebung, ohne daß man trotz der technischen und wirtschaftlichen Vorteile diese Möglichkeit bisher bei der Herstellung von Muffenrohren mittels geteilter Formen genutzt hat.

Eine besonders vorteilhafte Ausgestaltung besteht darin, daß in zwei in Umfangsrichtung um 180° versetzten Abschnitten an der Außenseite des rohrförmigen Abschnitts jeweils zumindest zwei, in Durchflußrichtung einen Abstand voneinander aufweisende, als Rollsicherung gestaltete Profilierungen vorgesehen sind, wobei die Profilierungen in diesen beiden Abschnitten einander paarweise zugeordnet sind.

Nach einer ersten Variante können die Profilierungen eines jeden Abschnitts mit ihren vom rohrförmigen Abschnitt abgewandten Begrenzungen eine Stützebene definieren. Man kann dann beim Stapeln die Elemente mit diesen Profilierungen direkt aufeinandersetzen, sofern die jeweils äußeren Rohre einer horizontalen Lage jeweils eine seitliche Abstützung, wie z.B. durch eine Bordwand oder ein System von Rungen bei einem Transportmittel, erhalten. Fehlt eine solche seitliche Abstützun, ist es zweckmäßiger, auf die Profilierungen der einen horizontalen Lage von Elementen Bretter oder eine andere plattenartige Zwischenlage aufzulegen und die nächste horizontale Lage der Elemente dann auf diese Zwischenlage aufzusetzen. Es genügt jedoch eine einfache, ebene Zwischenlage, die von den Kosten her nicht mit den bisher eingesetzten, als Rollsicherung dienenden Vorrichtungen vergleichbar ist und deren Rücktransport deshalb nicht erforderlich ist.

Eine andere vorteilhafte Variante besteht darin, daß die Profilierungen mit ihren vom rohrförmigen Abschnitt abgewandten Begrenzungen eine konkave Kreiszylindermantelfläche definieren, deren Durchmesser dem Außendurchmesser des rohrförmigen Abschnitts angepaßt ist, so daß die rohrförmigen Abschnitte der oeberen horizontalen Lage von Elementen jeweilis in die konkav begrenzten Profilierungen der Elemente der unteren Lage eingelegt werden können.

Dabei müssen die Elemente der einen Lage gegenüber den Elementen der anderen Lage in Durchflußrichtung der Elemente so versetzt werden, daß sich die Profilierungen nicht gegenseitig behindern.

Wegen der Muffen müssen die Elemente, insbesondere wenn es sich um Muffenrohre handelt, so gestapelt werden, daß die Muffenenden jeweils benachbarter Elemente in entgegengesetzte Richtungen weisen.

Dabei stellt es eine vorteilhafte Ausgestaltung dar, daß alle Profilierungen in Durchflußrichtung die gleiche Länge aufweisen und daß die dem muffenfreien Ende benachbarte Profilierung von diesem Ende einen ersten Abstand einhält, der zumindest etwas größer ist als die Länge der Muffe, und daß die der Muffe benachbarte Profilierung vom freien Ende der Muffe einen zweiten Abstand einhält der dem ersten Abstand zuzüglich der Länge der Profilierung entspricht.

Damit besteht die Möglichkeit, ohne mit den Muffen in Kollision zu geraten, einander benachbarte Elemente derart versetzt zueinander anzuordnen, daß ihre Profilierungen mit ihren in Durchflußrichtung weisenden Stirnflächen aneinander anliegen und die gestapelten Elemente dadurch gegen eine Verschiebung zueinander in Durchflußrichtung gesichert sind.

Wenn der Stapel fertig gebildet ist, wird er durch Spannbänder gesichert.

Anhand der nun folgenden Beschreibung zweier in der Zeichnung dargestellter Ausführungsbeispiele der Erfindung wird diese näher erläutert.

Es zeigt:
- Fig. 1: einen Querschnitt durch die Verbindungsstelle zweier Muffenrohre,
- Fig. 2: einen Querschnitt durch ein Muffenrohrpaar mit einer als Rollsicherung dienenden Profilierung,
- Fig. 3: eine Draufsicht auf den mit der Profilierung versehenen Bereich des Rohrs in Fig. 2,
- Fig. 4: einen der Fig. 2 ähnlichen Querschnitt nach einer anderen Ausführungsform und
- Fig. 5: eine Ansicht zweier in einem Stapel benachbarter Muffenrohre.

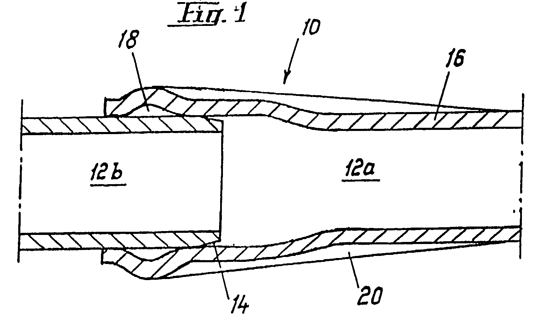

Bei der in Fig. 1 gezeigten Verbindungsstelle ist der linke, muffenartige Endabschnitt 10 eines Muffenrohrs 12a dargestellt, in den der rechte, mit einer äußeren Abschrägung 14 versehene, glatte Endabschnitt eines ebensolchen Muffenrohrs 12b eingeschoben ist.

Der muffenartige Endabschnitt 10 ist gegenüber dem glatten Rohrbereich 16 im Durchmesser so erweitert, daß er diesen glatten Rohrbereich 16 übergreifen kann.

Nahe dem Ende des Endabschnitts 10 ist dieser mit einer ringförmigen Querschnittserweiterung 18 versehen, die zur Aufnahme eines nicht gezeigten Dichtungsrings dient.

Alle Abschnitte der Muffenrohre 12a und 12b, mit Ausnahme der Abschrägung 14, weisen die gleiche Wandstärke auf, die aufgrund des kostengünstigen Materials größer gewählt ist, als bei den herkömmlichen, ausgehend vom Extrusionsverfahren hergestellten Kunststoff-Muffenrohren.

Als zusätzliche Verstärkung des stark beanspruchten, muffenartigen Endabschnitts 10, ist dieser mit äußeren Längsrippen 20 versehen, die lediglich beispielhaft die Gestaltungsfreiheit andeuten, die durch die Anwendung des Preßverfahrens gewonnen ist. Es können aber Rippen oder andere geeignete Profilierungen an der Außenseite der Muffenrohre 12a und 12b auch dazu benutzt werden, das Rollen solcher Rohre zu verhindern, so daß besondere Vorrichtungen für den Transport der Muffenrohre bzw. zur Sicherung von Rohrstapeln entfallen können. Diese Profilierungen können sich über einen wesentlichen Teil der Rohrlänge erstrecken, wobei lediglich der zum Einstecken in dem muffenartigen Endabschnitt 10 bestimmte glatte Endabschnitt freigehalten werden muß.

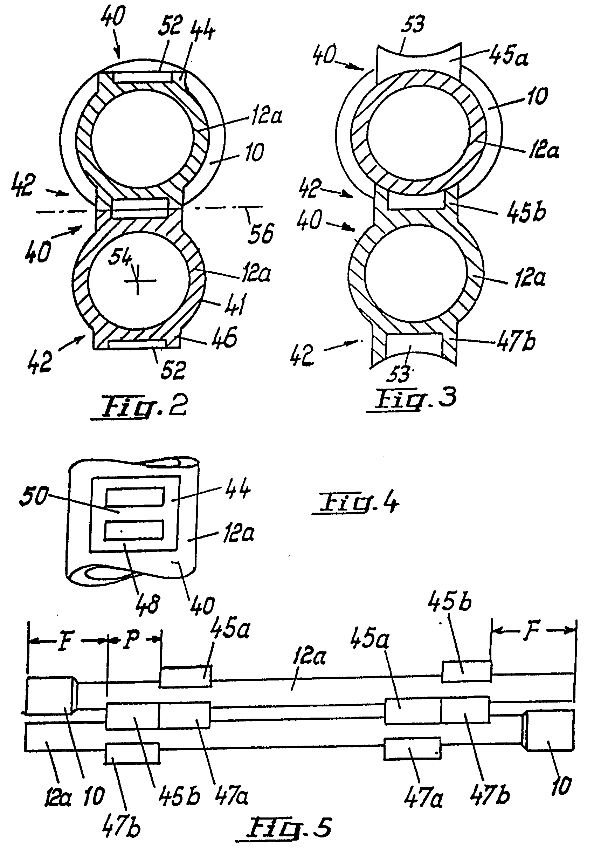

Das in Fig. 2 gezeigte Muffenrohr besitzt in zwei einander diameteral gegenüberliegenden Umfangsabschnitten 40 und 42 einander paarweise zugeordnete Profilierungen 44 bzw. 46, wobei zumindest zwei solcher Paare 44 und 46 in einem Abstand in Längsrichtung des Rohrs vorgesehen sind, der für eine sichere Stapelung ausreicht.

Wie die Fig. 2 und 4 zeigen, besteht die Profilierung aus einem an den Rohrumfang 41 angeformten, radial vorspringenden Vierkantholprofil 48 mit einer Mittelrippe 50. Die vom Rohrumfang 41 abgewandte Begrenzung 52 der Profilierung definiert eine zur Rohrachse 54 parallele Ebene 56, wobei alle Profilierungen 44 bzw. 46 eines jeden der einander diametral gegenüberliegenden Um-fangsabschnitte 40 bzw. 42 jeweils eine gemeinsame Ebene definieren.

Falls gewährleistet ist, daß die Rohre innerhalb eines Stapels nicht seitlich ausweichen können, kann man übereinander angeordnete Rohre direkt mit den Profilierungen 44 und 46 aufeinandersetzen, andernfalls ist es zur Stabilisierung des Stapels zweckmäßig, zwischen den Profilierungen 44 und 46 Bretter oder ähnliche einfache, plattenförmige Unterlagen vorzusehen.

Die Fig. 3 zeigt eine Variante, bei der die vom Rohrumfang 41 abgewandte Begrenzung 53 der Profilierungen 45 und 47 jeweils konkav gestaltet ist und eine Kreiszylindermantelfläche definiert, deren Durchmesser dem Außendurchmesser der Rohre ent spricht, so daß das jeweils obere Rohr in die konkave Begrenzung 53 des unteren Rohrs eingelegt werden kann.

Damit dies möglich ist, müssen die Profilierungen 45 und 47 der oberen und der unteren Rohre gegeneinander in Rohrlängsrichtung gegeneinander versetzt sein, wodurch sich zugleich die Möglichkeit bietet, die Profilierungen der oberen und der unteren Rohrlagen einander hintergreifend und in Rohrlängsrichung aneinander anliegend anzuordnen und dadurch innerhalb des Rohrstapels die Rohre gegen Verschiebung in Längsrichtung zu sichern.

Die Fig. 5 zeigt zwei benachbarte Muffenrohre 12a, deren Muffen 10 in entgegengesetzte Richtungen weisen. Alle Profilierungen 45a und 47a sowie 45b und 47b weisen die gleiche Länge auf und der Abstand der den Muffen 10 benachbarten Profilierungen 45a und 47a von diesen Muffen 10 setzt sich zusammen aus dem Abstand F der dem muffenfreien Rohrende benachbarten Profilierungen 45b und 47b von diesem Ende 60 zuzüglich der Länge P der Profilierungen.

## Patentansprüche

1. Preßkörper aus Kunststoff in Form eines mit mindestens einer Muffe (10) versehenen Muffenrohrs (12a, 12b, 22), insbesondere für Abwasserleitungen, der am freien Ende mindestens eines rohrförmigen Abschnitts (16) eine mit ihrem Innendurchmesser dem Außendurchmesser des rohrförmigen Abschnitts (16) angepaßte, verstärkte Muffe (10) und im Bereich der Muffe einen Ringbereich (18, 26) mit vergrößertem Innendurchmesser zur Aufnahme eines Dichtungsrings aufweist, wobei der Preßkörper an der Außenseite des rohrförmigen Abschnitts (16) mit Profilierungen versehen ist, dadurch gekennzeichnet daß der Preßkörper durch die sich zumindest über einen Teil der Rohrlänge erstreckenden Profilierungen (44, 46, 45a, 47a, 45b, 47b) unrund gestaltet ist.

2. Preßkörper nach Anspruch 1, *dadurch gekennzeichnet,* daß in zwei in Umfangsrichtung um 180° versetzten Abschnitten (40, 42) jeweils zumindest zwei, in Durchflußrichtung einen Abstand voneinander aufweisende, als Rollsicherung gestaltete Profilierungen (44, 46, 45a, 47a, 45b, 47b) umfassen, die in diesen beiden Abschnitten einander paarweise zugeordnet sind.

3. Preßkörper nach einem der Ansprüche 1 oder 2, *dadurch gekennzeichnet,* daß die Profilierungen (44, 46) eines jeden Abschnitts (40, 42) mit ihren vom rohrförmigen Abschnitt abgewandten Begrenzungen eine Stützebene (56) definieren.

4. Preßkörper nach einem der Ansprüche loder 2, *dadurch gekennzeichnet,* daß die Profilierungen (45a, 47a, 45b, 46b) mit ihren vom rohrförmigen Abschnitt abgewandten Begrenzungen (53) eine konkave Kreiszylindermantelfläche definieren, deren Durchmesser dem Außendurchmesser des rohrförmigen Abschnitts (16) angepaßt ist.

5. Preßkörper nach einem der vorhergehenden Ansprüche, *dadurch gekennzeichnet,* daß alle Profilierungen (45a, 45b, 47a, 47b) in Durchflußrichtung die gleiche Länge (P) aufweisen und daß die dem muffenfreien Ende benachbarte Profilierung (45b, 47b) von diesem Ende einen ersten Abstand (F) einhält, der zumindest etwas größer ist als die Länge (M) der Muffe (10), und daß die der Muffe benachbarte Profilierung (45a, 47a) vom freien Ende der Muffe einen zweiten Abstand (F+P) einhält der dem ersten Abstand (F) zuzüglich der Länge der Profilierung (P) entspricht.

6. Preßköper nach einem der vorhergehenden Ansprüche, *dadurch gekennzeichnet,* daß an der Außenseite der Muffe (10) in Richtung der Rohrachse (54) verlaufende Verstärkungsrippen (20, 28, 30, 32) angebracht sind.

7. Preßkörper nach einem der vorhergehenden Ansprüche, *dadurch gekennzeichnet,* daß er eine gleichbleibende Wandstärke aufweist, mit Ausnahme eines gegebenenfalls vorhandenen, muffenfreien Einsteckendes, das an seiner Außenkante abgeschrägt ist.

8. Preßkörper nach einem der vorhergehenden Ansprüche, *dadurch gekennzeichnet,* daß auf der Außenfläche des rohrförmigen Abschnitts (16) über seine Länge verteilt mehrere umlaufende Rippen angeordnet sind.

## Claims

1. Press-moulded body of synthetic material in the form of a socket pipe (12a, 12b, 22), especially for effluent conduits, which is provided with a socket (10) and which at the free end of at least one tubular portion (16) has a reinforced socket (10) matched by its inner diameter to the outer diameter of the tubular portion (16) and in the region of the socket has an annular region (18, 26) with enlarged inner diameter for the reception of a sealing ring, wherein the press-moulded body is provided with profiles at the outer side of the tubular portion (16), characterised thereby that the press-moulded body is shaped to be non-round by the profiles (44, 46, 45a, 47a, 45b, 47b) extending over at least a part of the pipe length.

2. Press-moulded body according to claim 1, characterised thereby that [in] two portions (40, 42) displaced in circumferential direction by 180° each time comprise at least two profiles (44, 46, 45a, 47a, 45b, 47b) which are spaced part in the throughflow direction, are formed as security against rolling and which are associated with one another in pairs in these two portions.

3. Press-moulded body according to claim 1 or 2, characterised thereby that the profiles (44, 46) of one of each portion (40, 42) define a support plane (56) by their boundaries remote from the tubular portion.

4. Press-moulded body according to claim 1 or 2, characterised thereby that the profiles (45a, 47a, 45b, 46b) define a concave circularly cylindrical shell surface, the diameter of which is matched to the outer diameter of the tubular portion (16), by their boundaries (53) remote from the tubular portion.

5. Press-moulded body according to one of the preceding claims, characterised thereby that all profiles (45a, 45b, 47a, 47b) have the same length (P) in throughflow direction and that the profile (45b, 47b) adjacent to the socket-free end has a first spacing (F) from this end which is at least somewhat larger than the length (M) of the socket (10) and that the profile (45a, 47a) adjacent to the socket has a second spacing (F + P) from the free end of the socket which corresponds to the first spacing (F) plus the length of the profile (P).

6. Press-moulded body according to one of the preceding claims, characterised thereby that reinforcing ribs (20, 28, 30, 32) extending in direction of the pipe axis (54) are made at the outer side of the socket (10).

7. Press-moulded body according to one of the preceding claims, characterised thereby that it has a constant wall thickness with the exception of an optionally present socket-free plug-in end which is chamfered at its outer edge.

8. Press-moulded body according to one of the preceding claims, characterised thereby that several encircling ribs are arranged on the outer surface of the tubular portion (16) and distributed over its length.

## Revendications

1. Pièce pressée en matière plastique en forme d'un tuyau (12a, 12b, 22) à manchon, notamment pour des conduites d'eaux usées, qui est muni d'au moins un manchon (10), qui a à l'extrémité libre d'au moins un tronçon (16) tubulaire un manchon renforcé, dont le diamètre intérieur est adapté au diamètre extérieur du tronçon (16) tubulaire, et dans la région du manchon une partie (18, 26) annulaire ayant un diamètre intérieur agrandi pour la réception d'un anneau d'étanchéité, la pièce pressée étant munie de profilages sur la face extérieure du tronçon (16) tubulaire, caractérisée en ce que la pièce pressée est agencée de manière non circulaire par les profilages (44, 46, 45a, 47a, 45b, 47b) qui s'étendent au moins sur une partie de la longueur du tuyau.

2. Pièce pressée suivant la revendication 1, caractérisée en ce qu'il est prévu, dans deux tronçons (40, 42) décalés de 180° dans la direction du pourtour, au moins deux profilages (44, 46, 45a, 47a, 45b, 47b), qui sont à distance l'un de l'autre dans la direction de passage, qui sont agencés en dispositif empêchant le roulement et qui sont associés par paire dans ces deux tronçons.

3. Pièce pressée suivant l'une des revendications 1 ou 2, caractérisée en ce que, les délimitations des profilages (44, 46) de chaque tronçon (40, 42) qui sont éloignées du tronçon tubulaire définissent un plan (56) d'appui.

4. Pièce pressée suivant l'une des revendications 1 ou 2, caractérisée en ce que, les délimitations (53) des profilages (45a, 47a, 45b, 46b) éloignées du tronçon tubulaire définissent une surface latérale cylindrique circulaire concave dont le diamètre est adapté au diamètre extérieur du tronçon (16) tubulaire.

5. Pièce pressée suivant l'une des revendications précédentes, caractérisée en ce que tous les profilages (45a, 45b, 47a, 47b) ont la même longueur (P) dans la direction de passage et que le profilage (45b, 47b) voisin de l'extrémité sans manchon respecte, par rapport à cette extrémité, une première distance (F) qui est au moins un peu plus grande que la longueur (M) du manchon (10) et, en ce que le profilage (45a, 47a) voisin du manchon respecte, par rapport à l'extrémité libre du manchon, une deuxième distance (F + P) qui correspond à la première distance (F) plus la longueur (P) du profilage.

6. Pièce pressée suivant l'une des revendications précédentes, caractérisée en ce qu'il est prévu sur la face extérieure du manchon (10) des nervures (20, 28, 30, 32) de renforcement qui s'étendent dans la direction de l'axe (54) du tuyau.

7. Pièce pressée suivant l'une des revendications précédentes, caractérisée en ce qu'elle a une épaisseur de paroi qui reste la même, à l'exception d'une extrémité à enfiler sans manchon qui est éventuellement présente et dont le bord extérieur est biseauté.

8. Pièce pressée suivant l'une des revendications précédentes, caractérisée en ce qu'il est monté sur la surface extérieure du tronçon (16) tubulaire, en étant réparties sur sa longueur, plusieurs nervures qui font le tour.
